**Europäisches Patentamt**

(19) **European Patent Office**

**Office européen des brevets**

(11) Numéro de publication: **0 086 727**
**B1**

(12)                    **FASCICULE DE BREVET EUROPEEN**

(45) Date de publication du fascicule du brevet:
19.06.85

(51) Int. Cl.⁴: **F 02 F 11/00**, F 16 J 15/06, F 16 J 15/12

(21) Numéro de dépôt: 83420017.2

(22) Date de dépôt: 31.01.83

(54) Joint de culasse pour moteur à combustion interne.

(30) Priorité: 12.02.82 FR 8202648

(43) Date de publication de la demande:
24.08.83 Bulletin 83/34

(45) Mention de la délivrance du brevet:
19.06.85 Bulletin 85/25

(84) Etats contractants désignés:
AT BE CH DE GB IT LI LU NL SE

(56) Documents cités:
**DE - B - 1 050 620**
**DE - B - 1 151 981**
**FR - A - 2 032 044**
**GB - A - 1 067 389**
**US - A - 4 126 318**

**MOTORTECHNISCHE ZEITSCHRIFT vol. 52 no. 9,
septembre 1981, pages 361-364, Schwäbisch Gmund,
DE, R. Bindel: "Die Zylinderkopfdichtung Ferrolastic 61
für nachziehfreie Zylinderkopfverspannungen"**

(73) Titulaire: **CURTY, 25, rue Aristide Briand, Saint-Priest,
Rhône (FR)**

(72) Inventeur: **Ulmer, Georges, 14, rue des dahlias,
Lyon 3ème, Rhône (FR)**
Inventeur: **Genin, Bernard Claude Denis, 6, avenue
Marcel Cachin, Venissieux, Rhône (FR)**

(74) Mandataire: **Maureau, Philippe et al, Cabinet Germain &
Maureau Le Britannia - Tour C 20, bld Eugène Déruelle
Boîte Postale 3011, F-69392 Lyon Cédex 03 (FR)**

BUNDESDRUCKEREI BERLIN

## Description

La présente invention a pour objet un joint de culasse pour moteur à combustion interne.

Un joint de culasse est situé entre le bloc moteur et la culasse et doit remplir plusieurs fonctions et notamment:

— assurer l'étanchéité au liquide de refroidissement et au liquide de lubrification, qui circulent entre le bloc moteur et la culasse;

— assurer l'étanchéité aux gaz de combustion à des pressions et des températures élevées;

— régler l'épaisseur disponible entre la culasse et le bloc moteur en faisant office de butée de serrage;

— compenser les irrégularités géométriques des plans de joint de culasse et du bloc moteur, de façon à maintenir le contact et conserver l'étanchété initiale, malgré la déformation du moteur survenant au cours du fonctionnement de celui-ci.

Habituellement, les fonctions d'étanchéité du joint de culasse sont différenciées:,

— l'étanchéité au liquide de refroidissement eau-glycol et à l'huile de lubrification est en général réalisée par le matériau de base du joint constitué par des cartons d'amiante agrafés sur une tôle perforée, un tissu métallique enduit sur ses deux faces d'un mélange fibres d'amiante-élastomère, etc. . . .,

— l'étanchéité au gaz est généralement réalisée par des anneaux de feu métalliques en acier, acier électrozingué, acier plaqué d'aluminium, etc. . .

L'ensemble de ces étanchéités est obtenu grâce à un fort serrage de la culasse sur le bloc moteur par l'intermédiaire de vis de serrage. Ce fort serrage a cependant l'inconvénient d'engendrer des déformations de la culasse et de chemises s'il y en a, d'autant plus grandes qu'il est plus élevé.

En outre, l'utilisation d'amiante pour la réalisation du joint pose un problème au niveau de la manipulation de ce matériau compte tenu de l'insalubrité de celui-ci.

Pour remplir les conditions d'étanchéité aux fluides,il est également connu d'utiliser des cordons d'élastomères, en particulier d'élastomères silicones, associés à un joint du type précité.

Les moteurs diesel à préchambre de combustion posent un problème tout particulier d'étanchéité, notamment ceux qui utilisent un bloc prévu initialement pour des moteurs à essence, dans lesquels le nombre de points de serrage du joint est réduit.

En outre, dans le joints traditionnels, une partie de l'effort de serrage, du l'ordre de 50%, est absorbé par le matériau constitutif du joint, lorsqu'il s'agit d'un joint en amiante. Dans le cas d'un joint entièrement métallique, l'âme du joint absorbe également une partie de l'effort de serrage, du fait de la conception des anneaux de feu qui, en position écrasée, possèdent la même épasseur que le reste du joint. Il convient donc, dans tous les cas, pour obtenir une bonne étanchéité aux gaz, d'exercer un effort de serrage important qui peut se traduire par une déformation temporaire ou permanente, des différentes pièces concernées, bloc, cylindres, chemises, culasse, notamment dans le cas de culasses à - base d'aluminium.

La présente invention vise à remédier à ces inconvénients:

A cet effet, dans le joint qu'elle concerne, du type comprenant une armature centrale constituée par une plaque métallique et des joints d'étanchéité aux passages de fluides, constitués par des cordons d'élastomère déposés sur la surface de la plaque centrale, d'étanchéité au gaz étant réalisée au niveau de chaque chambre de combustion par un anneau de feu constitué par un système entièrement métallique présentant des nervures symétriques par rapport à la plaque métallique formant l'âme du joint, chaque anneau de feu comprend, au niveau d'une chambre à étancher:

— deux tôles nervurées prenant appui de part et d'autre de la plaque centrale dont le bord est situé en retrait de l'anneau de feu, l'extrémité de l'une des tôles étant dans le plan d'une face de la plaque, et l'extrémité de l'autre tôle étant décalée en direction de la première d'une valeur égale à la moitié de l'épaisseur de la plaque,

— une tôle d'épaisseur égale à la moitié de l'épaisseur de la plaque possédant une partie en forme de C dont l'extrémité libre, dans le prolongement de la plaque centrale, sert d'appui aux deux tôles nervurées, et dont l'autre extrémité vient en recouvrement de la tôle nervurée dont l'extrémité a subi un décalage par rapport à la plaque centrale, et

— une tôle possédant une partie en forme de C venant en recouvrement des deux tôles nervurées et de la dernière tôle citée.

Cet agencement assure une symétrie des anneaux de feu relativement à la plaque centrale, permettant de réaliser une compression symétrique des cordons d'élastomère disposés de part et d'autre de la plaque.

Les joints en élastomère étant disposés de façon symétrique par rapport au plan de chaque plaque, sont comprimés lors du serrage sans opposer une résistance importante à celui-ci, de telle sorte que la charge du serrage est presque totalement utilisable sur les anneaux de feu, pour assurer une bonne étanchéité aux gaz. Comme la charge nécessaire à assurer une bonne étanchéité aux gaz est identique à celle qui correspond à la solution classique,la charge totale est fortement réduite du fait de sa concentration sur les anneaux de feu, cette réduction étant de l'ordre de moitié par rapport au cas tradionnel. La valeur de la charge nécessaire à l'obtention de l'étanchéité étant plus faible qu'habituellement, les risques de déformation de la culasse et des chemises sont très nettement réduits.

La disposition symétrique des cordons d'étanchéité et des nervures des anneaux de feu par rapport la plaque centrale, assure une compression égale des cordons d'étanchéité de l'ordre de 30% en épaisseur, assurant une bonne étanchéité sans fatigue des joints, ce qui ne serait pas le cas si la disposition des joints de part et d'autre de la plaque était dissymétrique, la compression étant par exemple de 10% et de 50% pour les deux cordons situés de part et d'autre de la plaque.

Il est intéressant de noter que l'épaisseur de l'anneau de feu en position serrée est légèrement supérieure à celle de la partie située en arrière de la préchambre de combustion, dans le cas d'un moteur diesel, cette différence d'épaisseur permettant d'assurer une excellente étanchéité aux gaz au niveau de l'anneau de feu proprement dit.

Du fait que la partie centrale du joint de culasse formant l'âme de celui-ci est située en retrait de chaque anneau de feu, elle peut être réalisée en un matériau différent de celui constitutif des anneaux de feu. C'est ainsi notamment que l'âme du joint peut peut être réalisée en alliage à base d'aluminium et que chaque anneau de feu peut être réalisé en acier inoxydable.

En outre, ce joint de culasse comporte des bavettes et renforts qui permettent, avec l'intercylindre, d'obtenir un renforcement mécanique dans les deux axes de chaque anneau de feu.

Les cordons d'élastomère constituant les joints d'étanchéité au niveau des passages de fluides peuvent être réalisés de différentes façons, l'essentiel étant de limiter au maximum le fluage latéral. C'est ainsi qu'il est possible de mouler chaque cordon d'élastomère sur la plaque centrale proprement dite, de mouler les cordons à travers des trous pratiqués dans la plaque centrale, ou encore de mouler les cordons indépendamment de la plaque et de les coller sur cette dernière.

De toute façon, l'invention sera bien comprise à l'aide de la description qui suit en référence au dessin schématique annexé représentant, à titre d'exemple non limitatif, une forme d'exécution de ce joint de culasse:

Fig. 1 est une vue en plan d'un joint de culasse selon l'invention destiné à équiper un moteur diesel à combustion interne;

Fig. 2 est une vue en coupe transversale de ce joint de culasse et à échelle agrandie selon la ligne 2-2 de fig. 1;

Fig. 3 est une vue en coupe transversale et à échelle agrandie de ce joint, selon la ligne 3-3 de fig. 1;

Fig. 4 est une vue en coupe transversale et à échelle agrandie de ce joint selon la ligne 4-4 de fig. 1;

Fig. 5 est une vue illustrant un mode de réalisation d'un cordon élastomère destiné à assurer l'étanchéité vis-à-vis des fluides.

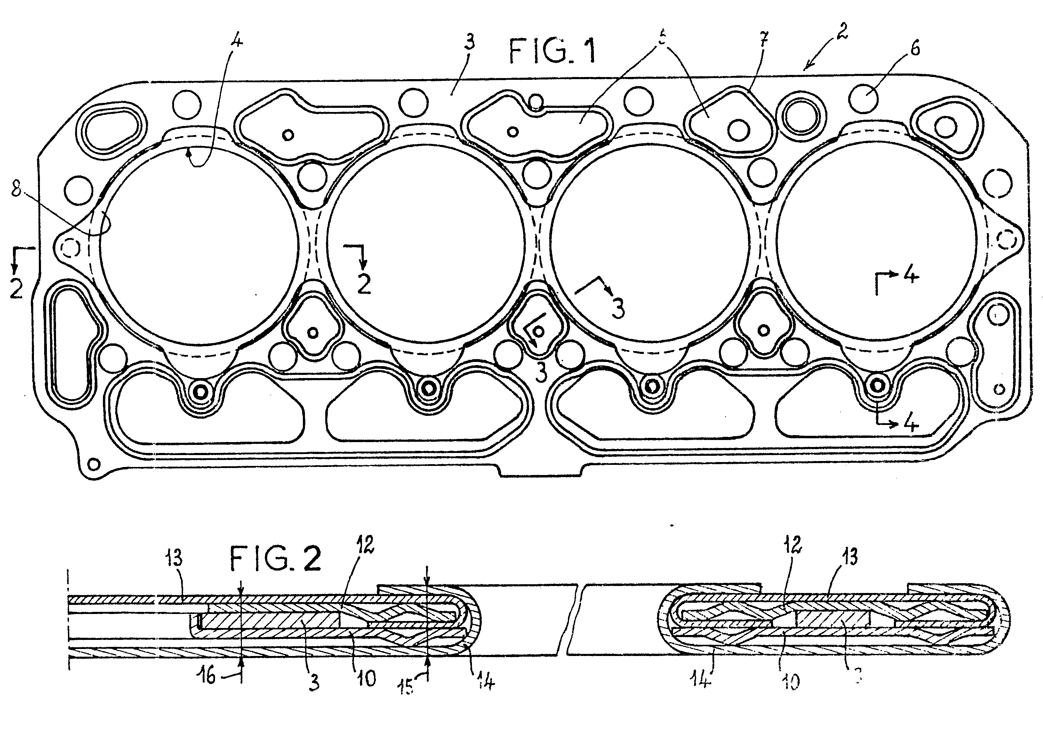

Le joint de culasse (2), représenté aux fig. 1 à 4, est destiné à équiper un moteur diesel à quatre cylindres. Ce joint de culasse comprend, de manière connue, une plaque centrale (3) métallique présentant un certain nombre d'orifices (4) pour les chambres de combustion du moteur, et d'orifices (5) pour les passages de liquides de lubrification et de refroidissement. Le serrage de la culasse sur le bloc moteur avec interposition du joint de culasse (2) est réalisé par l'intermédiaire de vis traversant des ouvertures (6) ménagées dans le joint de culasse.

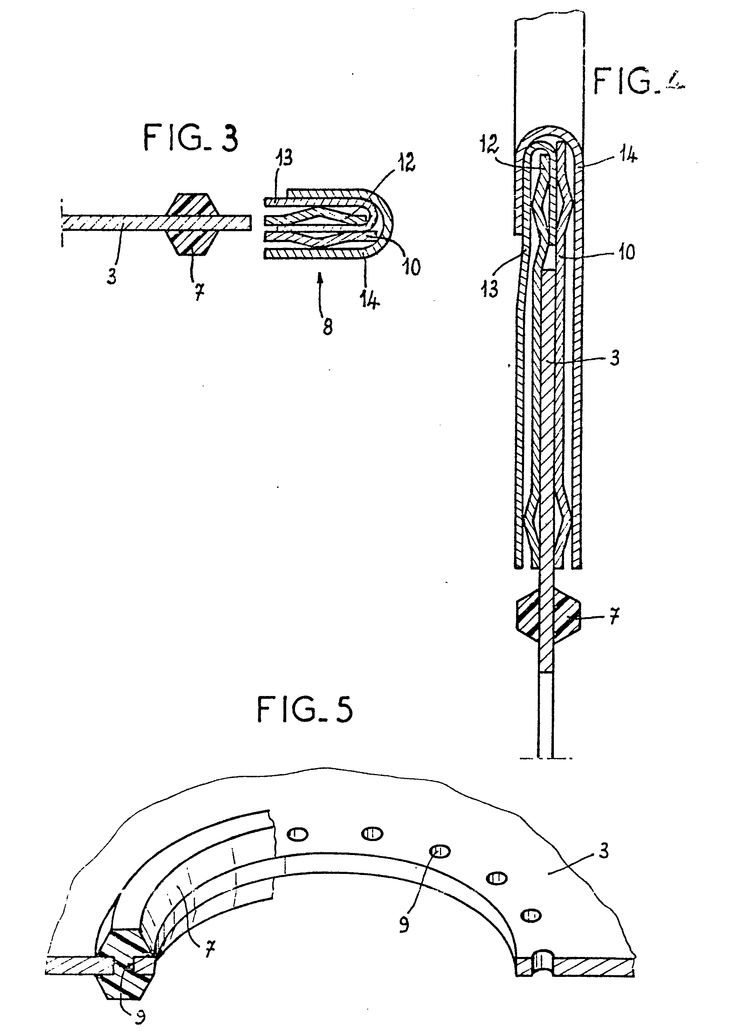

L'étanchéité aux fluides, à savoir liquide de refroidissement eau-glycol, et huile de lubrification, est réalisée par l'intermédiaire de joints élastomères (7), combinés avec des anneaux de feu (8) entièrement métalliques. Les joints élastomères correspondant à un passage de fluide sont disposés de manière symétrique par rapport à la plaque centrale métallique (3). Ces joints peuvent être obtenus soit par moulage directement sur la plaque, de part et d'autre de celle-ci, soit par moulage avec passage à l'intérieur de trous (9) ménagés dans l'épaisseur de la plaque, comme montré à la fig. 5, ou encore par moulage indépendamment de la plaque avec fixation sur celle-ci par exemple par collage, l'essentiel étant que le joint résiste au maximum au fluage latéral. Les joints formant cordons d'étanchéité aux fluides peuvent être réalisés en différents matériaux, et notamment en élastomère silicone, nitrile, polyacrylique, fluoré, etc...

Chaque anneau de feu est constitué par un système entièrement métallique comprenant deux tôles nervurées, respectivement (10) et (12), destinées à venir prendre appui de part et d'autre de la plaque centrale (3), l'extrémité de la plaque (12) étant décalée en direction de la plaque (10), relativement au plan de la plaque centrale (3). Au niveau de l'anneau de feu, les deux tôles (10) et (12) viennent en appui contre l'extrémité d'une tôle (13) en forme de C, d'épaisseur égale à la moitié de l'épaisseur de la plaque centrale (3), cette tôle (13) venant en recouvrement de la tôle nervurée (12), qui présente un décalage vers la tôle (10) relativement à la plaque centrale (3). L'ensemble des tôles nervurées (10, 12) et de la tôle (13) est recouvert par une tôle (14) de section en C au niveau de l'anneau de feu. Cet agencement permet d'obtenir une symétrie rigoureuse des anneaux de feu relativement à la plaque centrale (3).

Il est à noter que l'épaisseur en position serrée au niveau des anneaux de feu est légèrement supérieure à l'épaisseur en arrière de ceux-ci. A titre d'exemple, l'épaisseur peut être de 1,70 millimètre au point (15) de la fig. 2, alors qu'elle n'est que de 1,65 millimètre au point (16), ce qui permet d'assurer une excellente étanchéité aux gaz, compte tenu de la légère surépaisseur au niveau de la partie active des anneaux de feu.

Les différentes vues en coupe ainsi que la vue de face de la fig. 1 montrent l'existence de bavettes et de renforts, qui permettent, avec l'intercylindre, d'obtenir un renforcement mécanique dans les deux axes de l'anneau de feu.

D'un point de vue pratique, il ressort de la structure de ce joint de culasse que, lors du serrage de la culasse sur le bloc moteur, les joints d'étanchéité (7) vont se comprimer sans opposer une grande résistance, de telle sorte que la presque totalité de la charge de serrage va être exercée sur l'anneau de feu. Cette caractéristique permet d'obtenir une excellente étanchéité au niveau des chambres de combustion, avec une charge de serrage d'une valeur sensiblement inférieure à la charge de serrage nécessaire avec les joints traditionnels.

La réalisation de ce joint peut être faite:

— avec une plaque centrale en acier zingué, acier inoxydable, aluminium ou alliage léger,
— avec des anneaux nervurés en acier, acier électro-zingué, acier inoxydable, acier plaqué d'aluminium, et
— avec des anneaux de feu en acier électro-zingué, acier plaqué d'aluminium, acier inoxydable...

Comme il ressort de ce qui précède, l'invention apporte une grande amélioration à la technique existante en fournissant un joint de culasse apte à assurer une excellente étanchéité aux liquides et aux gaz, malgré une charge de serrage relativement réduite, et n'utilisant pas d'amiante dans sa composition, ce qui est intéressant d'un point de vue de la salubrité du travail nécessaire à la réalisation de ce joint.

## Revendications

1. Joint de culasse (2) pour moteur à combustion interne, du type comprenant une armature centrale constituée par une plaque métallique (3) et des joints d'étanchéité (7) aux passages de fluide (5), constitués par des cordons d'élastomère déposés sur la surface de la plaque centrale (3), l'étanchéité au gaz étant réalisée au niveau de chaque chambre de combustion (4) par un anneau de feu (8) constitué par un système entièrement métallique présentant des nervures symétriques par rapport à la plaque métallique (3) formant l'âme du joint, caractérisé en ce que chaque anneau de feu (8) comprend, au niveau d'une chambre (4) à étancher:

— deux tôles nervurées (10, 12) prenant appui de part et d'autre de la plaque centrale (3) dont le bord est situé en retrait de l'anneau de feu (8), l'extrémité de l'une des tôles (1) étant dans e plan d'une face de la plaque (3), et l'extrémité de l'autre tôle (12) étant décalée en direction de la première d'une valeur égale à la moitié de l'épaisseur de la plaque,
— une tôle (13) d'épaisseur égale à la moitié de l'épaisseur de la plaque (3) possédant une partie en forme de C dont l'extrémité libre, dans le prolongement de la plaque centrale (3), sert d'appui aux deux tôles nervurées (10, 12) et dont l'autre extrémité vient en recouvrement de la tôle nervurée (12) dont l'extrémité a subi un décalage par rapport à la plaque centrale (3) et,
— une tôle (14) possédant une partie en forme de C venant en recouvrement des deux tôles nervurées (10, 12) et de la dernière tôle (13) citée.

2. Joint de culasse (2) selon la revendication 1, caractérisé en ce que l'épaisseur en position serrée au niveau des anneaux de feu (8) est légèrement supérieure à l'épaisseur en arrière de ceux-ci.

3. Joint de culasse (2) selon la revendication 2, caractérisé en ce que la différence entre les épaisseurs au niveau des anneaux de feu et en arrière de ceux-ci, est de l'ordre de 0,05 millimètre.

4. Joint de culasse (2) selon l'une quelconque des revendications 1 à 3, caractérisé en ce que la plaque métallique (3) formant l'âme du joint est réalisée en un matériau différent de celui dans lequel sont réalisés les anneaux de feu (8).

5. Joint de culasse (2) selon l'une quelconque des revendications 1 à 4, caractérisé en ce que les cordons d'élastomère assurant l'étanchéité aux passages de fluides (5) sont disposés symétriquement par rapport à la plaque (3), et sont moulés à travers des trous (9) ménagés dans la plaque centrale (3).

## Patentansprüche

1. Zylinderkopfdichtung (2) für eine Brennkraftmaschine, des Typs beinhaltend eine aus einer metallischen Platte (3) gebildete zentrale Armierung und Dichtungen (7) für die Fluiddurchlässe (5), gebildet aus auf der Fläche der zentralen Platte (3) niedergelegten elastomeren Schnüren, wobei die Gasabdichtung im Bereich einer jeden Brennkammer (4) durch einen Feuerring (8) verwirklicht ist, der aus einem vollständig metallischen System gebildet ist, das symmetrische Rippen bezüglich der die Seele der Dichtung bildenden metallischen Platten (3) aufweist, dadurch gekennzeichnet, daß jeder Feuerring (8) im Bereich einer abzudichtenden Kammer (4) beinhaltet:

— zwei gerippte Bleche (10, 12), die sich auf den beiden Seiten der zentralen Platte (3) abstützen, deren Rand zurückspringend zum Feuerring (8) liegt, wobei das Ende des einen Bleches (10) in der Ebene einer Fläche der Platte (3) liegt und das Ende des anderen Bleches (12) in Richtung auf das erste Blech um eine Größe gleich der Hälfte der Dicke der Platte versetzt liegt,
— ein Blech (13) einer Dicke gleich der Hälfte der Dicke der Platte (3), mit einem C-förmigen Abschnitt, dessen freies Ende, in der

les anneaux de feu, cette réduction étant de l'ordre de moitié par rapport au cas tradionnel. La valeur de la charge nécessaire à l'obtention de l'étanchéité étant plus faible qu'habituellement, les risques de déformation de la culasse et des chemises sont très nettement réduits.

La disposition symétrique des cordons d'étanchéité et des nervures des anneaux de feu par rapport la plaque centrale, assure une compression égale des cordons d'étanchéité de l'ordre de 30% en épaisseur, assurant une bonne étanchéité sans fatigue des joints, ce qui ne serait pas le cas si la disposition des joints de part et d'autre de la plaque était dissymétrique, la compression étant par exemple de 10% et de 50% pour les deux cordons situés de part et d'autre de la plaque.

Il est intéressant de noter que l'épaisseur de l'anneau de feu en position serrée est légèrement supérieure à celle de la partie située en arrière de la préchambre de combustion, dans le cas d'un moteur diesel, cette différence d'épaisseur permettant d'assurer une excellente étanchéité aux gaz au niveau de l'anneau de feu proprement dit.

Du fait que la partie centrale du joint de culasse formant l'âme de celui-ci est située en retrait de chaque anneau de feu, elle peut être réalisée en un matériau différent de celui constitutif des anneaux de feu. C'est ainsi notamment que l'âme du joint peut peut être réalisée en alliage à base d'aluminium et que chaque anneau de feu peut être réalisé en acier inoxydable.

En outre, ce joint de culasse comporte des bavettes et renforts qui permettent, avec l'intercylindre, d'obtenir un renforcement mécanique dans les deux axes de chaque anneau de feu.

Les cordons d'élastomère constituant les joints d'étanchéité au niveau des passages de fluides peuvent être réalisés de différentes façons, l'essentiel étant de limiter au maximum le fluage latéral. C'est ainsi qu'il est possible de mouler chaque cordon d'élastomère sur la plaque centrale proprement dite, de mouler les cordons à travers des trous pratiqués dans la plaque centrale, ou encore de mouler les cordons indépendamment de la plaque et de les coller sur cette dernière.

De toute façon, l'invention sera bien comprise à l'aide de la description qui suit en référence au dessin schématique annexé représentant, à titre d'exemple non limitatif, une forme d'exécution de ce joint de culasse:

Fig. 1 est une vue en plan d'un joint de culasse selon l'invention destiné à équiper un moteur diesel à combustion interne;

Fig. 2 est une vue en coupe transversale de ce joint de culasse et à échelle agrandie selon la ligne 2-2 de fig. 1;

Fig. 3 est une vue en coupe transversale et à échelle agrandie de ce joint, selon la ligne 3-3 de fig. 1;

Fig. 4 est une vue en coupe transversale et à échelle agrandie de ce joint selon la ligne 4-4 de fig. 1;

Fig. 5 est une vue illustrant un mode de réalisation d'un cordon élastomère destiné à assurer l'étanchéité vis-à-vis des fluides.

Le joint de culasse (2), représenté aux fig. 1 à 4, est destiné à équiper un moteur diesel à quatre cylindres. Ce joint de culasse comprend, de manière connue, une plaque centrale (3) métallique présentant un certain nombre d'orifices (4) pour les chambres de combustion du moteur, et d'orifices (5) pour les passages de liquides de lubrification et de refroidissement. Le serrage de la culasse sur le bloc moteur avec interposition du joint de culasse (2) est réalisé par l'intermédiaire de vis traversant des ouvertures (6) ménagées dans le joint de culasse.

L'étanchéité aux fluides, à savoir liquide de refroidissement eau-glycol, et huile de lubrification, est réalisée par l'intermédiaire de joints élastomères (7), combinés avec des anneaux de feu (8) entièrement métalliques. Les joints élastomères correspondant à un passage de fluide sont disposés de manière symétrique par rapport à la plaque centrale métallique (3). Ces joints peuvent être obtenus soit par moulage directement sur la plaque, de part et d'autre de celle-ci, soit par moulage avec passage à l'intérieur de trous (9) ménagés dans l'épaisseur de la plaque, comme montré à la fig. 5, ou encore par moulage indépendamment de la plaque avec fixation sur celle-ci par exemple par collage, l'essentiel étant que le joint résiste au maximum au fluage latéral. Les joints formant cordons d'étanchéité aux fluides peuvent être réalisés en différents matériaux, et notamment en élastomère silicone, nitrile, polyacrylique, fluoré, etc. . .

Chaque anneau de feu est constitué par un système entièrement métallique comprenant deux tôles nervurées, respectivement (10) et (12), destinées à venir prendre appui de part et d'autre de la plaque centrale (3), l'extrémité de la plaque (12) étant décalée en direction de la plaque (10), relativement au plan de la plaque centrale (3). Au niveau de l'anneau de feu, les deux tôles (10) et (12) viennent en appui contre l'extrémité d'une tôle (13) en forme de C, d'épaisseur égale à la moitié de l'épaisseur de la plaque centrale (3), cette tôle (13) venant en recouvrement de la tôle nervurée (12), qui présente un décalage vers la tôle (10) relativement à la plaque centrale (3). L'ensemble des tôles nervurées (10, 12) et de la tôle (13) est recouvert par une tôle (14) de section en C au niveau de l'anneau de feu. Cet agencement permet d'obtenir une symétrie rigoureuse des anneaux de feu relativement à la plaque centrale (3).

Il est à noter que l'épaisseur en position serrée au niveau des anneaux de feu est légèrement supérieure à l'épaisseur en arrière de ceux-ci. A titre d'exemple, l'épaisseur peut être de 1,70 millimètre au point (15) de la fig. 2, alors qu'elle n'est que de 1,65 millimètre au point (16), ce qui permet d'assurer une excellente étanchéité aux gaz, compte tenu de la légère surépaisseur au niveau de la partie active des anneaux de feu.

Les différentes vues en coupe ainsi que la vue de face de la fig. 1 montrent l'existence de bavettes et de renforts, qui permettent, avec l'intercylindre, d'obtenir un renforcement mécanique dans les deux axes de l'anneau de feu.

D'un point de vue pratique, il ressort de la structure de ce joint de culasse que, lors du serrage de la culasse sur le bloc moteur, les joints d'étanchéité (7) vont se comprimer sans opposer une grande résistance, de telle sorte que la presque totalité de la charge de serrage va être exercée sur l'anneau de feu. Cette caractéristique permet d'obtenir une excellente étanchéité au niveau des chambres de combustion, avec une charge de serrage d'une valeur sensiblement inférieure à la charge de serrage nécessaire avec les joints traditionnels.

La réalisation de ce joint peut être faite:

— avec une plaque centrale en acier zingué, acier inoxydable, aluminium ou alliage léger,
— avec des anneaux nervurés en acier, acier électro-zingué, acier inoxydable, acier plaqué d'aluminium, et
— avec des anneaux de feu en acier électro-zingué, acier plaqué d'aluminium, acier inoxydable...

Comme il ressort de ce qui précède, l'invention apporte une grande amélioration à la technique existante en fournissant un joint de culasse apte à assurer une excellente étanchéité aux liquides et aux gaz, malgré une charge de serrage relativement réduite, et n'utilisant pas d'amiante dans sa composition, ce qui est intéressant d'un point de vue de la salubrité du travail nécessaire à la réalisation de ce joint.

## Revendications

1. Joint de culasse (2) pour moteur à combustion interne, du type comprenant une armature centrale constituée par une plaque métallique (3) et des joints d'étanchéité (7) aux passages de fluide (5), constitués par des cordons d'élastomère déposés sur la surface de la plaque centrale (3), l'étanchéité au gaz étant réalisée au niveau de chaque chambre de combustion (4) par un anneau de feu (8) constitué par un système entièrement métallique présentant des nervures symétriques par rapport à la plaque métallique (3) formant l'âme du joint, caractérisé en ce que chaque anneau de feu (8) comprend, au niveau d'une chambre (4) à étancher:

— deux tôles nervurées (10, 12) prenant appui de part et d'autre de la plaque centrale (3) dont le bord est situé en retrait de l'anneau de feu (8), l'extrémité de l'une des tôles (1) étant dans e plan d'une face de la plaque (3), et l'extrémité de l'autre tôle (12) étant décalée en direction de la première d'une valeur égale à la moitié de l'épaisseur de la plaque,
— une tôle (13) d'épaisseur égale à la moitié de l'épaisseur de la plaque (3) possèdant une partie en forme de C dont l'extrémité libre, dans le prolongement de la plaque centrale (3), sert d'appui aux deux tôles nervurées (10, 12) et dont l'autre extrémité vient en recouvrement de la tôle nervurée (12) dont l'extrémité a subi un décalage par rapport à la plaque centrale (3) et,
— une tôle (14) possédant une partie en forme de C venant en recouvrement des deux tôles nervurées (10, 12) et de la dernière tôle (13) citée.

2. Joint de culasse (2) selon la revendication 1, caractérisé en ce que l'épaisseur en position serrée au niveau des anneaux de feu (8) est légèrement supérieure à l'épaisseur en arrière de ceux-ci.

3. Joint de culasse (2) selon la revendication 2, caractérisé en ce que la différence entre les épaisseurs au niveau des anneaux de feu et en arrière de ceux-ci, est de l'ordre de 0,05 millimètre.

4. Joint de culasse (2) selon l'une quelconque des revendications 1 à 3, caractérisé en ce que la plaque métallique (3) formant l'âme du joint est réalisée en un matériau différent de celui dans lequel sont réalisés les anneaux de feu (8).

5. Joint de culasse (2) selon l'une quelconque des revendications 1 à 4, caractérisé en ce que les cordons d'élastomère assurant l'étanchéité aux passages de fluides (5) sont disposés symétriquement par rapport à la plaque (3), et sont moulés à travers des trous (9) ménagés dans la plaque centrale (3).

## Patentansprüche

1. Zylinderkopfdichtung (2) für eine Brennkraftmaschine, des Typs beinhaltend eine aus einer metallischen Platte (3) gebildete zentrale Armierung und Dichtungen (7) für die Fluiddurchlässe (5), gebildet aus auf der Fläche der zentralen Platte (3) niedergelegten elastomeren Schnüren, wobei die Gasabdichtung im Bereich einer jeden Brennkammer (4) durch einen Feuerring (8) verwirklicht ist, der aus einem vollständig metallischen System gebildet ist, das symmetrische Rippen bezüglich der die Seele der Dichtung bildenden metallischen Platten (3) aufweist, dadurch gekennzeichnet, daß jeder Feuerring (8) im Bereich einer abzudichtenden Kammer (4) beinhaltet:

— zwei gerippte Bleche (10, 12), die sich auf den beiden Seiten der zentralen Platte (3) abstützen, deren Rand zurückspringend zum Feuerring (8) liegt, wobei das Ende des einen Bleches (10) in der Ebene einer Fläche der Platte (3) liegt und das Ende des anderen Bleches (12) in Richtung auf das erste Blech um eine Größe gleich der Hälfte der Dicke der Platte versetzt liegt,
— ein Blech (13) einer Dicke gleich der Hälfte der Dicke der Platte (3), mit einem C-förmigen Abschnitt, dessen freies Ende, in der Verlängerung der zentralen Platte (3), der Abstützung der beiden gerippten Bleche (10, 12) dient und dessen anderes Ende das gerippte Blech (12), dessen Ende einen Versatz bezüglich der zentralen Platte (3) hat, abdeckt und,

— ein Blech (14), mit einem C-förmigen Bereich, der die beiden gerippten Bleche (10, 12) und das zuletztgenannte Blech (13) abdeckt.

2. Zylinderkopfdichtung (2) nach Anspruch 1, dadurch gekennzeichnet, daß die Dicke der Spannlage im Bereich der Feuerringe (8) geringfügig größer als die Dicke hinter diesen ist.

3. Zylinderkopfdichtung (2) nach Anspruch 2, dadurch gekennzeichnet, daß der Unterschied zwischen den Dicken im Bereich der Feuerringe (8) und hinter diesen in der Größenordnung von 0,05 mm liegt.

4. Zylinderkopfdichtung (2) nach einem der Ansprüche 1—3, dadurch gekennzeichnet, daß die die Seele der Dichtung bildende metallische Platte (3) aus einem Material besteht, das unterschiedlich zu dem ist, aus dem die Feuerringe (8) hergestellt sind.

5. Zylinderkopfdichtung (2) nach einem der Ansprüche 1—4, dadurch gekennzeichnet, daß die die Abdichtung an den Fluiddurchlässen (5) gewährleistenden elastomeren Schnüre symmetrisch bezüglich der Platte (3) angeordnet sind und durch in der zentralen Platte (3) vorgesehene Löcher (9) hindurch vergossen sind.

## Claims

1. A head gasket (2) for an internal combustion engine of the type comprising a central support formed by a metal plate (3) and gaskets (7) providing a seal against the passage of fluids (5) formed by elastomer strips disposed on the surface of the central plate (3), gas-tightness being achieved with respect to each combustion chamber (4) by a heat resistant ring (8) formed by a completely metal system having ribs which are symmetrical with respect to the metal plate (3) forming the core of the gasket, characterised in that each heat resistant ring (8) comprises, with respect to a chamber to be sealed (4):

two ribbed sheets (10, 12) supported on either side of the central plate (3), the edge of which is disposed slightly inwardly of the heat resistant ring (8), the end of one of the sheets (10) being in the plane of a face of the plate (3) and the end of the other sheet (12) being offset in the direction of the first sheet by a value equal to half the thickness of the plate, a sheet (13) having a thickness equal to half the thickness of the plate (3) and having a C-shaped portion whose free end, in the extension of the central plate (3) acts as a support for the ribbed sheets (10, 12) and whose other end overlaps the ribbed sheet (12) whose end has been offset with respect to the central plate (3), and, a sheet (14) having a C-shaped portion which overlaps the two ribbed sheets (10, 12) and the sheet (13).

2. A head gasket as claimed in Claim 1, characterised in that the thickness in the clamped position in the area of the heat resistant rings (8) is slightly greater than the thickness to the rear of these rings.

3. A head gasket as claimed in Claim 2, characterised in that the difference between the thicknesses in the area of the heat resistant rings and to the rear of these is approximately 0.05 millimeters.

4. A head gasket as claimed in any one of Claims 1 to 3, characterised in that the metal plate (3) forming the core of the gasket is made of a different material to that from which the heat resistant rings (8) are made.

5. A head gasket as claimed in any one of Claims 1 to 4, characterised in that the elastomer strips providing leak-tightness against the passage of fluids (5) are disposed symmetrically with respect to the plate (3) and are moulded via holes (9) provided in the central plate (3).

FIG. 1

FIG. 2

FIG_3

FIG_4

FIG_5